# EUROPÄISCHE PATENTSCHRIFT

(11) **EP 1 929 590 B1**
(45) Veröffentlichungstag und Bekanntmachung des Hinweises auf die Patenterteilung: **25.02.2009**
(21) Anmeldenummer: 06805872.6
(22) Anmeldetag: 26.09.2006
(51) Int. Cl.: H01R 13/645, H01R 13/46

(54) **ELEKTRISCHE STECKVERBINDUNG UND VERFAHREN ZUR IDENTIFIZIERUNG EINES AKKUMULATORS**
ELECTRICAL PLUG-IN CONNECTION AND METHOD FOR THE IDENTIFICATION OF A BATTERY
CONNEXION ELECTRIQUE PAR FICHE ET PROCEDE D'IDENTIFICATION D'UN ACCUMULATEUR

(30) Priorität: 27.09.2005 DE 102005046040
(43) Veröffentlichungstag der Anmeldung: 11.06.2008
(73) Patentinhaber: REMA Lipprandt GmbH & Co. KG, D-53175 Bonn (DE)
(72) Erfinder: STANDKE, Kurt, 53177 Bonn (DE)
(74) Vertreter: Kluin, Jörg-Eden
(86) Internationale Anmeldenummer: PCT/EP2006/009347
(87) Internationale Veröffentlichungsnummer: WO 2007/036346

(56) Entgegenhaltungen:
- EP-A- 1 538 713
- DE-A1- 10 148 419
- DE-U1- 20 318 583
- DE-U1- 29 612 378
- US-A1- 2005 184 856

## Beschreibung

Die Erfindung betrifft eine elektrische Steckverbindung zum Anschluss eines Verbrauchers oder einer Ladevorrichtung an einen Akkumulator. Eine derartige Steckverbindung, die ein Steckerteil und ein Dosenteil umfasst, ist beispielsweise aus der EP 821 444 B1 bekannt. Sie dient insbesondere der Herstellung der elektrischen Verbindung zwischen Akkumulatoren von Elektro-Flurförderzeugen wie Gabelstaplern und Steuer- bzw. Regeleinrichtungen für die Antriebe der Elektro-Flurförderzeuge oder zur Herstellung der elektrischen Verbindungen zwischen diesen Akkumulatoren und Ladevorrichtungen für Akkumulatoren, die Steuer- bzw. Regeleinrichtungen umfassen, mittels welcher die Ladeparameter und Ladecharakteristik an den jeweiligen Akkumulator angepasst werden kann.

Je nach Fahrzeugtyp und Einsatzzweck finden bei Elektro-Flurförderzeugen Akkumulatoren unterschiedlicher Bauart Verwendung. Beispielhaft seien Trocken-, Gel- oder Nassakkumulatoren etc. genannt.

Um die Leistungsfähigkeit und die Lebensdauer dieser Akkumulatoren zu maximieren, ist es erforderlich, diese in Abhängigkeit spezifischer Parameter wie Bauart, Nennspannung, Kapazität, Restladung, Alter, Anzahl der Ladezyklen etc. mit einer spezifischen Entladecharakteristik zu entladen und mit einer spezifischen Ladecharakteristik wieder aufzuladen.

Mit modernen Verbrauchersteuerungen, beispielsweise Fahrsteuerungen bei Flurförderzeugen können Akkumulator-Historien gespeichert werden. Diese gespeicherten Daten finden Verwendung, um Parameter wie Ladungsentnahme oder Rückführung von elektrischer Energie durch Variation von Beschleunigungs- oder Maximalgeschwindigkeitswerten an die jeweilige Akkumulator-Historie anzupassen.

Die Akkumulator-Historie ist ferner interessant zur Ermittlung angemessener Mietkosten für einen Akkumulator, da in diese nicht nur die Gesamtbetriebsdauer oder Anzahl von Gesamtladezyklen, sondern auch Entlade- oder Ladeumstände für die Haltbarkeit und Lebenserwartung der Akkumulatoren von Bedeutung ist.

Zwar umfasst die elektrische Steckverbindung gemäß der EP 821 444 B1 Kodierstifte, die ein Überstecken von Stecker- und Dosenteil nur dann erlauben, wenn an dem Verbraucher- oder ladevorrichtungsseitigen Steckerteil die zum Akkumulator passende Spannung eingestellt ist, die Auswahl der Entlade- oder Ladecharakteristik obliegt jedoch der Bedienperson anhand der zufälligen Kenntnis oder beispielsweise an dem Fahrzeug befindlicher Informationen über den vorhandenen Akkumulator. In der Praxis wird daher der Anpassung der Entlade- oder Ladecharakteristik regelmäßig wenig Beachtung geschenkt, worunter die Leistungsfähigkeit und die Lebensdauer der Akkumulatoren leiden.

Ferner werden beispielsweise beim Mieten oder beim Leasing von Akkumulatoren oder von Fahrzeugen unter Einschluss der Akkumulatoren die Verbrauchskosten lediglich basierend auf der Nutzungsdauer des Akkumulators bzw. des Fahrzeugs abgerechnet. Wünschenswert wäre jedoch, dass besondere Betriebszustände, insbesondere nicht erlaubte wie Tiefentladung oder zu hohe Temperaturen des Akkumulators beim Laden oder Entladen berücksichtigt würden.

Dokument DE-U-29612378 offenbart eine elektrische Steckverbindung gemäß dem Oberbegriff des Anspruchs 1.

Der Erfindung liegt daher die Aufgabe zugrunde, eine elektrischen Steckverbin-dung zur Identifizierung eines Akkumulators zu schaffen.

Diese Aufgabe wird in ihrem vorrichtungsseitigen Aspekt durch die in Anspruch 1 wiedergegebene elektrische Steckverbindung gelöst.

Dadurch, dass das akkumulatorseitige Teil der Steckverbindung einen Transponder umfasst, auf dem zur Identifizierung des Akkumulators geeignete Daten gespeichert sind, kann der jeweilige Akkumulator mittels eines geeigneten Lesegerätes in Fällen, wo seine genaue Identität bei der Ermittlung von Kenngrößen von Bedeutung ist, selbsttätig identifiziert werden. '

Ein erstes wesentliches Anwendungsbeispiel der erfindungsgemäßen elektrischen Steckverbindung ist der Anschluss des Akkumulators an eine Ladevorrichtung. Durch die Identifizierung des Akkumulators mittels der Leseeinrichtung in eindeutiger Weise kann die Einstellung der Ladecharakteristik aufgrund von für diesen Akkumulator gespeicherten Daten erfolgen.

Bei der Leseeinrichtung kann es sich im einfachsten Fall um ein vom Bedienpersonal zu betätigendes Handlesegerät handeln. Die Auswahl und die Einstellung der Ladecharakteristik erfolgt dann ebenfalls manuell anhand für diesen Akkumulator hinterlegter Daten.

Bevorzugt ist es jedoch, wenn der ladevorrichtungsseitige Teil der Steckverbindung die Leseeinrichtung zum Lesen der von dem Transponder gespeicherten Daten umfasst. Weist die Ladevorrichtung eine Speichereinrichtung auf, mittels welcher die für den jeweiligen Akkumulator optimalen Ladeparameter enthält, so können diese Parameter beim Herstellen der Verbindung zwischen der Ladevorrichtung und dem Akkumulator mit Hilfe der Leseeinrichtung ausgelesen und - sofern die Ladevorrichtung mit einer geeigneten Steuer- bzw. Regeleinrichtung ausgestattet ist, selbsttätig an den jeweiligen Akkumulator angepasst werden.

Steht eine Mehrzahl insbesondere unterschiedlicher Ladevorrichtungen zur Verfügung, kann durch Identifizierung des jeweiligen Akkumulators beispielsweise mittels eines Lesegerätes am Eingang eines die Ladegeräte umfassenden Ladebereichs selbsttätig das am besten geeignet erscheinende Ladegerät dem Bedienpersonal angezeigt, beispielsweise durch optische und/oder akustische Signale.

Bei einem weiteren Anwendungsbeispiel der erfindungsgemäßen Steckvorrichtung ist ein Lesegerät an dem Elektro-Flurförderzeug selbst, besonders bevorzugt an dem antriebsseitigen Teil der Steckverbindung vorgesehen. Die eindeutige Identifizierung des Akkumulators ermöglicht dann dem Bedienpersonal eine manuelle Anpassung der Steuer- bzw. Regeleinrichtung des Antriebs des Elektro-Flurförderzeugs an diesen Akkumulator. Oder die Anpassung der Steuer- bzw. Regeleinrichtung erfolgt automatisch, wenn die Leseeinrichtung mit der Steuer- bzw. Regeleinrichtung gekoppelt ist und sie einen Speicher zum akkumulatorspezifischen Abspeichern von Betriebsdaten und der Betriebs-Historie sowie Mittel zur Anpassung der Entladungsparameter an diese Daten umfasst.

Ferner ist es möglich, das Lesegerät mit einer Einrichtung zu koppeln, die Daten zur Historie des jeweiligen Akkus enthält, und diese Daten zur Betriebskostenermittlung des Akkumulators zu verwenden. Insbesondere dann, wenn das Elektro-Flurförderzeug und/oder der Akkumulator gemietet oder geleast sind, können diese Daten durch Zuordnung zum jeweils identifizierten Akkumulator zur automatischen Abrechnung von Betriebskosten Verwendung finden.

Darüber hinaus ist es denkbar, Lesegeräte zur Identifizierung des jeweiligen Akkumulators an sämtlichen Stellen einzusetzen, an denen es auf die Kenntnis des jeweiligen Akkumulators ankommt. So können beispielsweise anhand von durch Steuer- bzw. Regeleinrichtungen der Antriebe der Flur-Förderzeuge und Steuer- bzw. Regeleinrichtungen der Ladegeräte aufgenommene Akkumulator-Historien Wartungs-, Kosten- und Ladepläne erstellt werden, die dann nach Identifizierung selbsttätig abgerufen und gegebenenfalls ausgeführt werden.

In der Zeichnung ist ein Ausführungsbeispiel der erfindungsgemäßen elektrischen Steckverbindung dargestellt. Es zeigen:
- Fig. 1: eine Explosionsdarstellung der wesentlichen Teile der elektrischen Steckverbindung in einer perspektivischen Ansicht;
- Fig. 2: eine Ansicht des elektrischen Steckgesichts des akkumulatorseitigen Dosenteils;
- Fig. 3: den Kodierstift des akkumulatorseitigen Dosenteils in einer Einzelteildarstellung in einer seitlichen Ansicht sowie
- Fig. 4: den Kodierstift in einer Fig. 3 entsprechenden Ansicht im zusammengefügten Zustand.

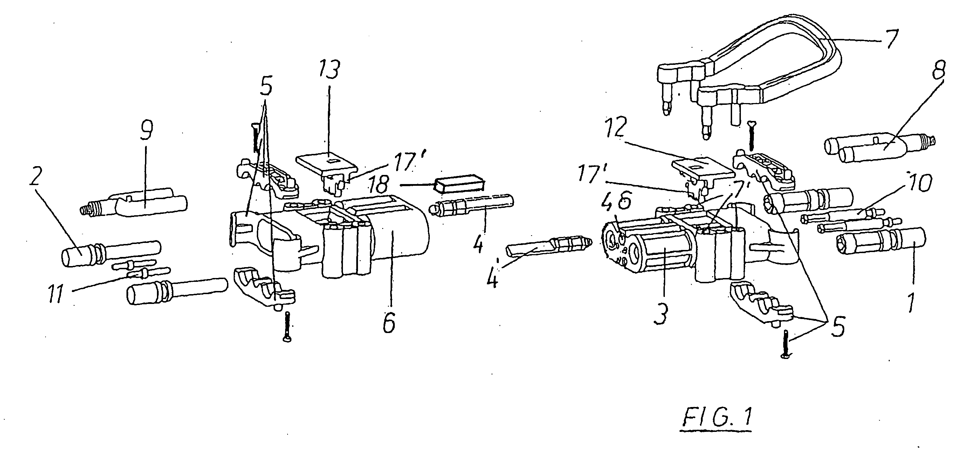

Die elektrische Steckvorrichtung gemäß Fig. 1 umfasst die links dargestellten Teile eines Gerätesteckers und die rechts dargestellten Teile einer Gerätsteckdose, nämlich die Hauptkontakthülsen 1 und die Hauptkontaktstifte 2, das Kontaktaufnahmeteil 3 der Gerätesteckdose, das Kontaktaufnahmeteil 6 des Gerätesteckers, die über Passflächen übersteckbaren Kodierstifte 4, 4' der Gerätesteckdose und des Gerätesteckers, Zugentlastungsschellen 5 zur Führung der elektrischen Zuleitung sowie eines Luftschlauches, welcher an Fluid/Luftkontaktteile des Gerätesteckers abgeschossen werden kann, einen Griff 7 für die Gerätesteckdose oder den Gerätestecker zur besseren Handhabung, Halterung 7' für den Griff, Fluid/Luftkontaktteile 8, 9 des Gerätesteckers und der Gerätesteckdose, mittig zu den Hauptkontakten angelegte Pilotkontakthülsen 10 und Pilotkontaktstifte 11, ein Verschlussteil 12 für die Gerätesteckdose sowie ein Verschlussteil 13 für den Gerätestecker, wobei letztere jeweils eine untere Arretierplatte 17, 17' umfassen.

An dem Kontaktaufnahmeteil 6 des Gerätesteckers, der beispielsweise mit einer Ladevorrichtung oder einem Verbraucher verbunden sein kann, ist oberhalb des Kodierstiftes 4 eine Leseeinrichtung 18 vorgesehen, mittels welcher die von dem Transponder gespeicherten Daten auslesbar sind. Die von der Leseeinrichtung ausgelesenen Daten werden dann dazu genutzt, entweder den jeweiligen Akkumulator zu identifizieren um beispielsweise die Ladecharakteristika einer nicht dargestellten Ladevorrichtung an den jeweiligen Akkumulator manuell oder - wenn die Ladevorrichtung geeignet ausgestaltet ist - automatisch anzupassen.

Zusätzlich kann eine Leseeinrichtung an einer Stelle, die von einem zu ladenden Flurförderzeug passiert wird, angeordnet sein. Aufgrund der von dieser Leseeinrichtung durchgeführten Identifizierung wird dann beispielsweise unter einer Mehrzahl von Ladevorrichtungen diejenige ausgewählt, deren Ladecharakteristika den Anforderungen des Akkumulators am nächsten kommen oder welche unter vielen Ladevorrichtungen als nächstes zur Verfügung steht. Die Kennzeichnung dieser Ladevorrichtung kann durch selbsttätig aktivierte optische Mittel, wie Leuchten, erfolgen.

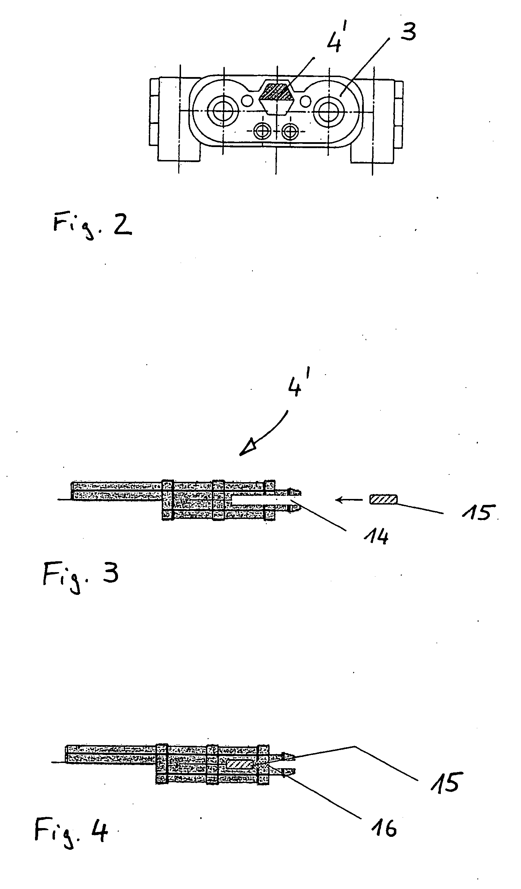

Wie insbesondere aus Fig. 3 und 4 erkennbar ist, in denen der Kodierstift 4' des akkumulatorseitigen Teils der elektrischen Steckverbindung dargestellt ist, ist von dem vom elektrischen Steckgesicht fortweisenden Ende in den Kodierstift ein Schlitz 14 eingearbeitet. In diesen Schlitz ist ein Transponder 15 eingesetzt und mit Hilfe einer Vergussmasse 16 stoffschlüssig mit dem Kodierstift verbunden.

Der Einsatz der elektrischen Steckverbindung ist keinesfalls auf die beschriebenen Anwendungsbeispiele beschränkt. Vielmehr ist der Einsatz immer dann denkbar und vorteilhaft, wenn eine automatische Identifizierung eines Akkumulators wünschenswert ist.

### Bezugszeichenliste:

- 1: Hauptkontakthülsen
- 2: Hauptkontaktstifte
- 3: Kontaktaufnahmeteil der Gerätesteckdose
- 4, 4': Kodierstifte
- 5: Zugentlastungsschelle
- 6: Kontaktaufnahmeteil des Gerätesteckers
- 7: Griff
- 7': Halterung
- 8: Fluid/Luftkontaktteil
- 9: Fluid/Luftkontaktteil
- 10: Pilotkontakthülsen
- 11: Pilotkontaktstifte
- 12: Verschlussteil
- 13: Verschlussteil
- 14: Schlitz
- 15: Transponder
- 16: Vergussmasse
- 17, 17': Arretierplatten
- 18: Leseeinrichtung

## Patentansprüche

1. Elektrische Steckverbindung zum Anschluss eines Verbrauchers oder einer Ladevorrichtung an einen Akkumulator,
mit einem Steckerteil
und mit einem Dosenteil, wobei
das akkumulatorseitige Teil der Steckverbindung einen Transponder (15) umfasst, auf dem zur Identifizierung des Akkumulators geeignete Daten gespeichert sind,
**dadurch gekennzeichnet,**
**dass** der Transponder (15) in einem Kodierstift (4') zum Kodieren der Steckverbindung für eine bestimmte Akkumulatorspannung vorgesehen ist.

2. Elektrische Steckverbindung nach Anspruch 1, **dadurch gekennzeichnet, dass** der Transponder (15) in einem von der dem Steckgesicht fortweisenden Ende des Kodierstifts (4') vorgesehenen Ausnehmung (14) stoffschlüssig eingesetzt ist.

3. Elektrische Steckverbindung nach Anspruch 1 oder 2, **dadurch gekennzeichnet, dass** der ladevorrichtungsseitige Teil der Steckverbindung eine Leseeinrichtung zum Lesen der von dem Transponder gespeicherten Daten umfasst.

4. Kodierstift (4') für eine elektrische Steckverbindung nach Anspruch 2 oder 3.

## Claims

1. Electrical plug-in connection for connecting a consumer or a charging device to a battery,
with a plug part
and with a socket part, in which
the part of the plug-in connection located on the battery side includes a transponder (15) on which data suitable for identifying the battery is stored,
**characterised in**
**that** the transponder (15) is provided in a coding key (4') for coding the plug-in connection for a specified battery voltage.

2. Electrical plug-in connection according to claim 1, **characterised in that** the transponder (15) is inserted in a material fit in a recess (14) provided by the end of the coding key (4') pointing away from the plug face.

3. Electrical plug-in connection according to claim 1 or 2, **characterised in that** the part of the plug-in connection located on the charging device side includes a reading device for reading the data stored by the transponder.

4. Coding key (4') for an electrical plug-in connection according to claim 2 or 3.

## Revendications

1. Connexion électrique pour brancher un utilisateur ou un dispositif chargeur à un accumulateur comprenant :
- une partie formant une fiche et
- une partie formant une douille,
la partie de la connexion, côté accumulateur, comprend un transpondeur (15) ayant en mémoire des données permettant d'identifier l'accumulateur,
**caractérisée en ce que**
le transpondeur (15) est dans une broche de codage (4') afin de coder la liaison enfichée pour une tension d'accumulateur définie.

2. Connexion électrique selon la revendication 1,
**caractérisée en ce que**
le transpondeur (15) est intégré par une liaison par la matière dans une extrémité invisible de la cavité (14) de la broche de codage (4') du connecteur.

3. Connexion électrique selon les revendications 1 ou 2,
**caractérisée en ce que**
la partie, côté chargeur, de la liaison par connecteur comprend une installation de lecture des données mémorisées par le transpondeur.

4. Broche de codage (4') pour une connexion électrique selon les revendications 2 ou 3.
